# EUROPEAN PATENT APPLICATION

(11) **EP 3 747 531 A1**
(43) Date of publication of application: **09.12.2020**
(21) Application number: 18903598.3
(22) Date of filing: 30.01.2018
(51) Int. Cl.: B01D 53/18, B01D 53/50, B01D 53/77, F23J 15/00, F23J 15/04

(54) **DESULFURIZATION SYSTEM**

(71) Applicant: Mitsubishi Hitachi Power Systems, Ltd., Yokohama-shi, Kanagawa 220-8401 (JP)
(72) Inventor: II Shinya, Yokohama-shi, Kanagawa 220-8401 (JP); NOSAKA Hiroyuki, Yokohama-shi, Kanagawa 220-8401 (JP); KATAGAWA Atsushi, Yokohama-shi, Kanagawa 220-8401 (JP); ISHIZAKA Hiroshi, Yokohama-shi, Kanagawa 220-8401 (JP); OKURA Hajime, Yokohama-shi, Kanagawa 220-8401 (JP); NAKAMOTO Takanori, Yokohama-shi, Kanagawa 220-8401 (JP); IMADA Noriyuki, Yokohama-shi, Kanagawa 220-8401 (JP)
(74) Representative: Hoffmann Eitle
(86) International application number: PCT/JP2018/002979
(87) International publication number: WO 2019/150432

(57) **Abstract**

Pump mechanical power and initial costs for a desulfurization system absorption column are reduced while desulfurization performance is assured by virtue of a desulfurization system (1) characterized by being provided with: an inlet duct (6) for inflow of a gas to be treated; an absorption column (2) wherein the gas to be treated introduced through the inlet duct (6) is brought into contact with an absorption liquid, sulfur oxides in the gas are removed, and exhaust gas after desulfurization treatment is discharged; and a flow control unit (11) for directing the flow of the gas flowing in the inlet duct (6) toward the center of the absorption column (2), the flow control unit (11) being disposed near the site where the inlet duct (6) and the absorption column (2) are connected.

## Description

### [Technical Field]

The present invention relates to a desulfurization system for purifying an exhaust gas discharged from a combustion equipment such as a boiler installed in a thermal power plant or factory, and to a desulfurization device capable of reducing initial costs of a desulfurization apparatus and a consumption power of a pump required to operate the same.

### [Background Art]

As a means for removing sulfur oxides contained in an exhaust gas discharged from a boiler, and the like in a thermal power plant, a wet lime gypsum method is widely used. The sulfur oxides contained in the exhaust gas are removed from the exhaust gas by passing through an absorption column which circulates and sprays an absorption slurry, and coming into contact with the slurry.

FIG. 9 is an explanatory view (side view) of a conventional desulfurization system.

FIG. 10 is a view (front view) as viewed from a direction of an arrow X in FIG. 9.

FIG. 11 is a cross-sectional view taken on line XI-XI in FIG. 10.

FIG. 12 is an explanatory view of a flow of an exhaust gas in FIG. 11.

FIG. 13 is an explanatory view of another conventional desulfurization system, which is an explanatory view of a desulfurization system having a different height of an inlet duct from FIG. 9.

FIG. 14 is a view (front view) as viewed from a direction of an arrow XIV in FIG. 13.

FIG. 15 is a cross-sectional view taken on line XV-XV in FIG. 14.

FIG. 16 is an explanatory view of a flow of an exhaust gas in FIG. 15.

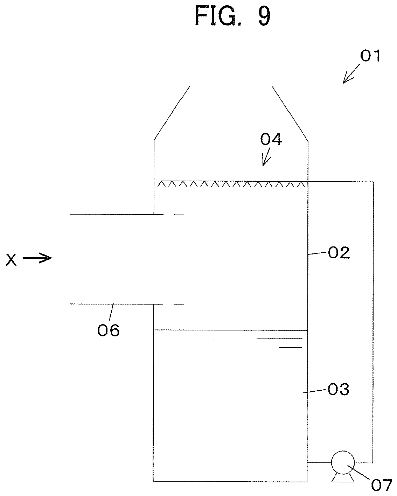

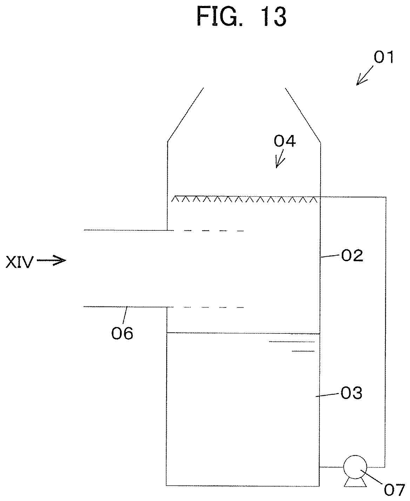

In the conventional desulfurization systems 01 shown in FIGS. 9 and 13, the exhaust gas is introduced through a duct 06 connected to an absorption column 02 above a liquid surface of an absorption slurry tank 03 disposed in a lower portion thereof, and flows vertically upward. In the absorption column 02, an absorption slurry is sprayed from a plurality of nozzles 04. Therefore, when the exhaust gas flows in the absorption column 02, the exhaust gas comes into contact with the absorption slurry to remove sulfur oxides.

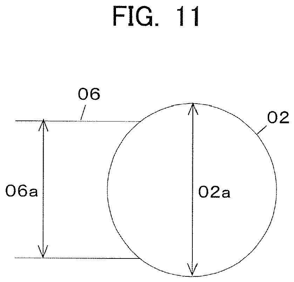

In FIGS. 11 to 16, a shape and a size of the duct 06 (hereinafter, an inlet duct) portion for introducing the exhaust gas into the absorption column 02 are determined, so that a flow rate is maintained in a certain range (about 10 to 15 m/s).

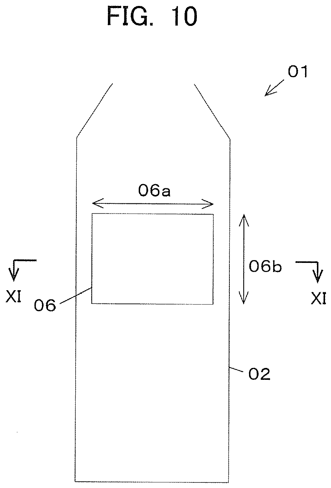

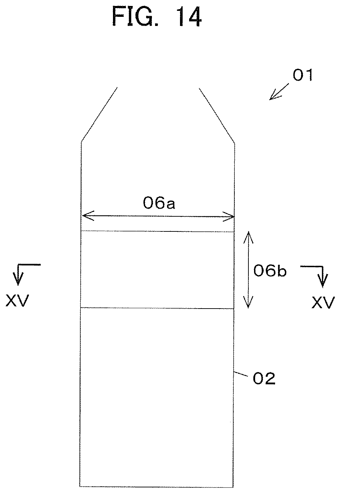

For the size of the inlet duct 06, when flow passage cross-sectional areas of the inlet duct 06 are the same as each other, compared to a configuration shown in FIG. 10, a height 06b of the inlet duct can be reduced by widening a horizontal width 06a as shown in FIG. 14. If the height 06b of the inlet duct 06 can be reduced, an entire height of the absorption column 02 can also be reduced, and a pump head (a distance for lifting the absorption slurry) of a circulation pump 07 can be lowered, such that a power required to operate the circulation pump 07 may be lowered.

Therefore, as a method for lowering the height 06b of the inlet duct 06 without changing the cross-sectional area of the inlet duct 06, a configuration, in which the width 06a of the inlet duct 06 is made equal to a diameter 02a of the absorption column 02, has been devised.

As such an absorption column structure of a wet lime gypsum method, a desulfurization system described in Patent Document 1 (Japanese Patent Laid-Open Publication No. S55-73319) is known in the art.

In Patent Document 1, a drift of a gas flow rate in the absorption column can be suppressed by expanding the inlet duct for introducing the exhaust gas into the absorption column in a horizontal direction until it is equal to a diameter of the absorption column.

Also in Patent Document 2 (Japanese Patent Laid-Open Publication No. H9-47631), similar to Patent Document 1, a ratio of a flatness of the inlet duct, the diameter of the absorption column, and the width of the inlet duct is defined, such that the width of the inlet duct is widened, and the height of the inlet is reduced. Thereby, the drift of the gas flow rate in the absorption column can be suppressed, and the height of the absorption column can be reduced.

Meanwhile, in Patent Document 3 (Japanese Patent Publication No. 5725725), a gas blow-through prevention member is discontinuously provided in a circumferential direction at an inner peripheral end portion of the absorption column, such that it is possible to prevent an unreacted gas from slipping through the vicinity of an inner wall of the absorption column.

### [Prior Art Document]

### [Patent Document]

Patent Document 1: Japanese Unexamined Patent Application Publication No. 55-73319
Patent Document 2: Japanese Unexamined Patent Application Publication No. 9-47631
Patent Document 3: Japanese Patent No. 5725725

### [Summary of Invention]

### [Technical Problem]

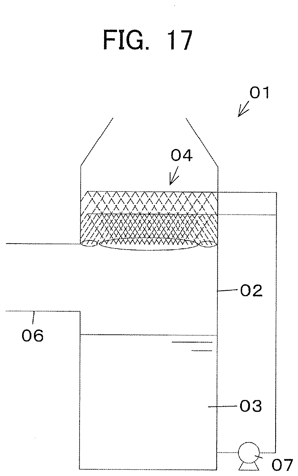

FIG. 17 is an explanatory view of a spray density of the absorption slurry, which is a side view corresponding to FIG. 9.

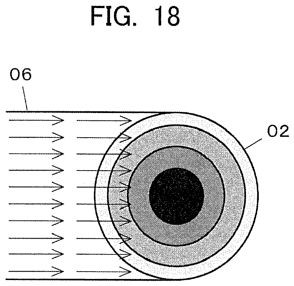

FIG. 18 is an explanatory view of the spray density of the absorption slurry, which is a cross-sectional view corresponding to FIG. 11.

In FIG. 17, the absorption slurry sprayed from a plurality of nozzles 04 in the absorption column 02 falls in the absorption column 02, and spreads in the horizontal direction. Therefore, the absorption slurry sprayed from the plurality of nozzles 04 arranged in the horizontal direction has a density increased toward a central portion of the cylindrical absorption column 02 as shown in FIGS. 17 and 18, and the density is reduced toward an outer edge portion of the absorption column 02.

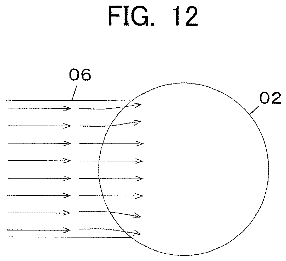

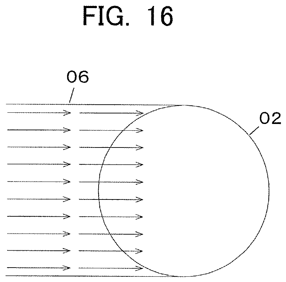

Herein, in the conventional configurations shown in FIGS. 13 to 16, since the width 06a of the inlet duct 06 is set to be equal to the diameter 02a of the absorption column 02, as shown in FIG. 16, the exhaust gas also flows in the outer edge portion of the absorption column 02. On the other hand, in the conventional configurations shown in FIGS. 9 to 12, as shown in FIG. 12, the gas easily flows toward the central portion of the absorption column 02, and the flow of the gas toward the outer edge portion is small compared to the conventional configuration shown in FIGS. 13 to 16. Therefore, in the configuration in which the width 06a of the inlet duct 06 is widened, the exhaust gas easily flows to the outer edge portion where the density of the absorption slurry is low. At the outer edge portion of the absorption column 02 where the density of the absorption slurry is low, absorption performance of the sulfur oxide (hereinafter, desulfurization performance) is poor. Therefore, the desulfurization performance may be deteriorated by widening the width 06a of the inlet duct 06.

In the configurations described in Patent Documents 1 and 2, it is not considered that a liquid density of the absorption liquid spray in the absorption column is reduced toward an outer peripheral portion, and a large amount of the exhaust gas is introduced on the circumferential wall surface of the absorption column having a low spray liquid density, such that blow-through of the exhaust gas (a phenomenon in which the exhaust gas passes upward the absorption column in an insufficiently desulfurized state) may easily occur, and the desulfurization performance may be reduced.

In addition, as in the configuration described in Patent Document 3, the method for installing the gas blow-through prevention member on the wall surface of the absorption column to prevent gas blow-through has a problem that a pressure loss of the spray portion is increased, and power consumption is increased.

Further, when narrowing the width 06a of the inlet duct 06 in consideration of the problem that the desulfurization performance is decreased, the height 06b of the inlet duct 06 is increased. In the absorption column 02, since the vicinity of the inlet duct 06 is repeatedly dried and wet by the absorption slurry, it is necessary to use an expensive material such as Hastelloy steel which is excellent in acid resistance, corrosion resistance, and abrasion resistance. When increasing the height of the absorption column 02, a range in which expensive materials are used is widened, and there is a problem that initial costs of the absorption column 02 are increased. In addition, when increasing the height of the absorption column 02, the pump head of the circulation pump 07 is also increased, and there is also a problem that the power of the circulation pump 07 is increased.

It is a technical object of the present invention to reduce initial costs and pump power of an absorption column in a desulfurization system while securing desulfurization performance.

### [Solution to Problem]

An invention of a first aspect of the present invention is a desulfurization system including: an inlet duct through which a gas to be treated inflows; and an absorption column configured to bring the gas to be treated introduced through the inlet duct into contact with an absorption liquid, remove sulfur oxides in the gas, and discharge the gas after desulfurization treatment, wherein the inlet duct has a horizontal width which is wider than a diameter of the absorption column on an upstream side in a flow direction of the gas to be treated, and a downstream end connected to the absorption column.

An invention of a second aspect of the present invention is the desulfurization system according to the first aspect of the present invention, further including a flow control part configured to deflect a flow of the gas flowing through the inlet duct toward a central portion of the absorption column.

An invention of a third aspect of the present invention is a desulfurization system including: an inlet duct through which a gas to be treated inflows; an absorption column configured to bring the gas to be treated introduced through the inlet duct into contact with an absorption liquid, remove sulfur oxides in the gas, and discharge the gas after desulfurization treatment; and a flow control part disposed near a connection part between the inlet duct and the absorption column, and configured to deflect a flow of the gas flowing through the inlet duct toward a central portion of the absorption column.

An invention of a fourth aspect of the present invention is the desulfurization system according to the third aspect of the present invention, wherein the inlet duct has a horizontal width which is equal to or larger than a diameter of the absorption column, and the flow control part deflects the flow of the gas flowing through the inlet duct toward the central portion of the absorption column.

An invention of a fifth aspect of the present invention is the desulfurization system according to any one of the second to fourth aspects of the present invention, wherein the flow control part includes a straightening plate disposed on an inner wall side of the inlet duct.

An invention of a sixth aspect of the present invention is the desulfurization system according to the fifth aspect of the present invention, wherein a material of the inlet duct portion which does not come into contact with the gas and the absorption liquid by the straightening plate is different from a material of the straightening plate.

An invention of a seventh aspect of the present invention is the desulfurization system according to any one of the second to fourth aspects of the present invention, wherein the flow control part includes a downstream part of the inlet duct having an inner wall shape which is inclined toward a center of the absorption column.

An invention of an eighth aspect of the present invention is the desulfurization system according to any one of the fifth to seventh aspects of the present invention, wherein the horizontal width of the inlet duct is equal to or larger than the diameter of the absorption column, a ratio of a length of a width of the inlet duct before being reduced by the flow control part to the width of the inlet duct after being reduced by the flow control part is 0.95 or less, and an angle of the flow control part which reduces the inlet duct is 45 degrees or less.

### [Advantageous Effects]

In accordance with the invention according to the first aspect of the present invention, by making the horizontal width of the inlet duct be larger than the diameter of the absorption column, and connecting the inlet duct to the absorption column, the height of the absorption column can be reduced, and further, the gas flow may flow to a center side of the absorption column, such that it is possible to secure a desulfurization performance of the desulfurization system. Thereby, initial costs and pump power of the absorption column in the desulfurization system can be reduced while securing the desulfurization performance.

In accordance with the invention according to the second aspect of the present invention, in addition to the effect of the first aspect of the present invention, the flow control part deflects a flow of the gas flowing through the inlet duct toward the central portion of the absorption column, such that even if widening the horizontal width of the inlet duct, it is possible to send the gas to a region in which the density of the absorption liquid is high within the absorption column.

In accordance with the invention according to the third aspect of the present invention, the flow control part deflects the flow of the gas flowing through the inlet duct toward the central portion of the absorption column, such that even if widening the horizontal width of the inlet duct, it is possible to send the gas to a region in which the density of the absorption liquid is high within the absorption column. Therefore, as compared to the conventional configuration which does not deflect the gas toward the central portion of the absorption column, desulfurization of the gas may be more easily performed and the desulfurization performance of the desulfurization system may be secured. In addition, since the horizontal width of the inlet duct can be widened, the height of the inlet duct may be shortened, and the height of the absorption column may be reduced. Thereby, costs of the absorption column may be reduced, the pump head of the absorption liquid may be shortened, and the required power may be reduced.

In accordance with the invention according to the fourth aspect of the present invention, in addition to the effect of the third aspect of the present invention, as compared to the case in which a horizontal width of the inlet duct is equal to or less than the diameter of the absorption column, the costs of the absorption column may be reduced, and thereby it is possible to reduce the power for pumping up the absorption liquid.

In accordance with the invention according to the fifth aspect of the present invention, in addition to the effect of any one of the second to fourth aspects of the present invention, by using the straightening plate, it is possible to prevent the structure of the inlet duct from being complicated and a problem entailed in strength from occurring.

In accordance with the invention according to the sixth aspect of the present invention, in addition to the effect of the fifth aspect of the present invention, a material of the inlet duct portion which does not come into contact with the gas and the absorption liquid by the straightening plate may be made of a low-cost material, and thereby costs may be reduced.

In accordance with the invention according to the seventh aspect of the present invention, in addition to the effect of any one of the second to fourth aspects of the present invention, an increase in the number of components may be prevented by controlling the flow of gas by the shape of the inlet duct.

In accordance with the invention according to the eighth aspect of the present invention, in addition to the effect of any one of the fifth to seventh aspects of the present invention, the height of the absorption column may be reduced, as well as a pressure loss and a difference between a wall surface flow rate and an average flow rate may be suppressed, and an increase in the pressure loss due to a generation of a vortex and adhesion of the absorption liquid may also be suppressed.

### [Brief Description of Drawings]

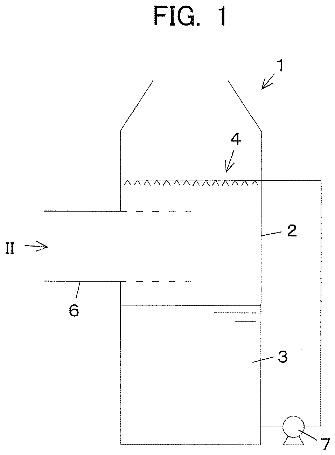

FIG. 1 is a schematic explanatory view of one embodiment of a desulfurization system of the present invention.

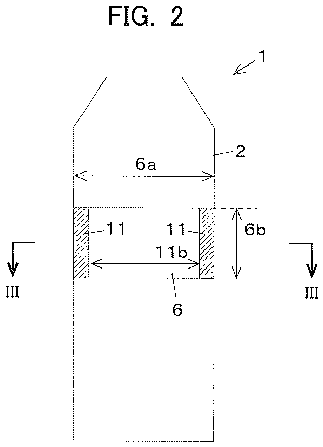

FIG. 2 is a view (front view) as viewed from a direction of an arrow II in FIG. 1.

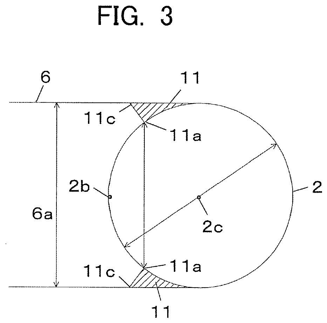

FIG. 3 is a cross-sectional view taken on line III-III in FIG. 2.

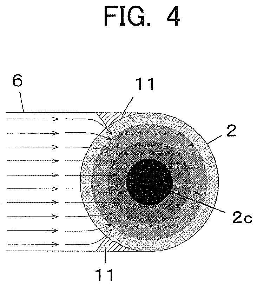

FIG. 4 is an explanatory view of a flow of gas in the desulfurization system of Embodiment 1.

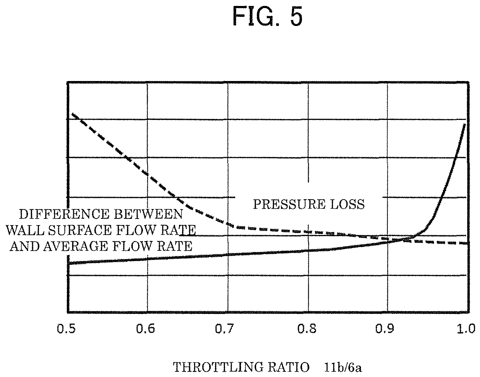

FIG. 5 is a graph showing a relationship between a throttling ratio of a straightening plate and a difference in a flow rate and a pressure loss in the desulfurization system of Embodiment 1.

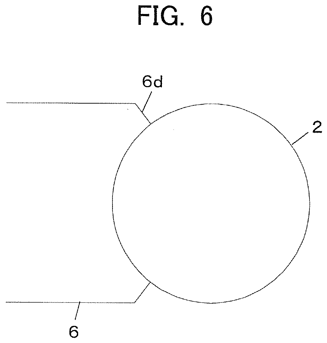

FIG. 6 is an explanatory view of Modification 1 of the present invention.

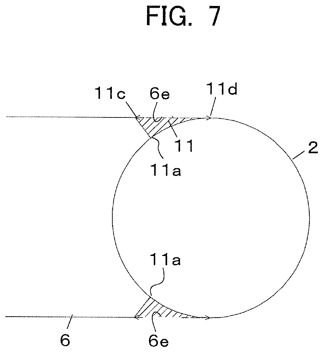

FIG. 7 is an explanatory view of Modification 2 of the present invention.

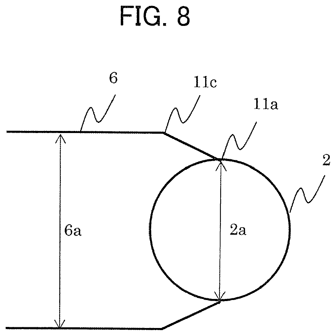

FIG. 8 is an explanatory view of Modification 3 of the present invention.
FIG. 9 is an explanatory view (side view) of a conventional desulfurization system.
FIG. 10 is a view (front view) as viewed from a direction of an arrow X in FIG. 9.
FIG. 11 is a cross-sectional view taken on line XI-XI in FIG. 10.
FIG. 12 is an explanatory view of a flow of an exhaust gas in FIG. 11.
FIG. 13 is an explanatory view of another conventional desulfurization system, which is an explanatory view of a desulfurization system having a different height of an inlet duct from FIG. 9.
FIG. 14 is a view (front view) as viewed from a direction of an arrow XIV in FIG. 13.

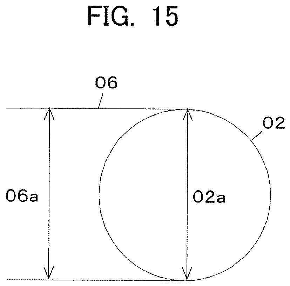

FIG. 15 is a cross-sectional view taken on line XV-XV in FIG. 14.
FIG. 16 is an explanatory view of a flow of an exhaust gas in FIG. 15.
FIG. 17 is an explanatory view of a spray density of the absorption slurry, which is a side view corresponding to FIG. 9.
FIG. 18 is an explanatory view of the spray density of the absorption slurry, which is a cross-sectional view corresponding to FIG. 11.

### [Description of Embodiments]

Hereinafter, embodiments of the present invention will be described.

### [Embodiment 1]

FIG. 1 is a schematic explanatory view of one embodiment of a desulfurization system of the present invention.

In FIG. 1, a desulfurization system 1 of the present invention has an absorption column 2. The absorption column 2 is formed in a cylindrical shape whose inside extends in a vertical direction. An absorption slurry tank 3, in which an absorption slurry (absorption liquid) is contained, is disposed in a lower portion of the absorption column 2.

A plurality of nozzles 4 for spraying the absorption slurry are arranged at an upper portion of the absorption column 2. The plurality of nozzles 4 are arranged at an interval in a horizontal direction, and although not shown in the drawings, a plurality of stages of the nozzles are arranged. The absorption slurry is pumped up from the absorption slurry tank 3 by a circulation pump 7 and supplied to the nozzles 4. Further, in connection with positions and the number of the nozzles 4, and configurations including the number, etc., various conventionally known configurations may be adopted. For example, the configuration is described in Japanese Patent Publication No. 5725725 (Patent Document 3), therefore, will not be illustrated and described in detail.

FIG. 2 is a view (front view) as viewed from a direction of an arrow II in FIG. 1.

FIG. 3 is a cross-sectional view taken on line III-III in FIG. 2.

FIG. 4 is an explanatory view of a flow of gas in the desulfurization system of Embodiment 1.

In FIGS. 1 to 3, an inlet duct 6 for introducing an exhaust gas (gas to be treated) into the absorption column 2 is connected thereto above the absorption slurry tank 3 and below the nozzles 4. The inlet duct 6 of Embodiment 1 has a horizontal width 6a equal to an inner diameter 2a of the absorption column 2. Therefore, a height 6b of the inlet duct 6 is set to be shortened compared to cases in which the horizontal width 6a is smaller than the inner diameter 2a of the absorption column 2 (the cases of FIGS. 9 to 12).

In the desulfurization system 1 of Embodiment 1, a pair of straightening plates 11 as an example of a flow control part is disposed at an interval in a width direction near a connection part between the inlet duct 6 and the absorption column 2. That is, the straightening plates 11 are arranged at a downstream end portion of the inlet duct 6 with respect to a flow direction of the gas. As shown in FIG. 4, the straightening plates 11 of Embodiment 1 have shapes and positions which are set so as to deflect the gas flowing into the absorption column 2 from the inlet duct 6 toward an inside (toward a central portion 2c side of the absorption column 2) in the horizontal direction. Therefore, a horizontal distance 11b between inner ends 11a of the pair of straightening plates 11 is set to be shorter than the width 6a of the inlet duct 6.

In addition, in Embodiment 1, an upstream end 11c of the straightening plate 11 is disposed on a downstream side from an upstream end 2b of the absorption column 2. Therefore, a flow passage for a gas of Embodiment 1 is throttled by the straightening plate 11 inside from the inlet (upstream end 2b) of the absorption column 2.

In the desulfurization system 1 of Embodiment 1 having the above-described configuration, when the exhaust gas flows into the absorption column 2, the exhaust gas is deflected toward the central portion 2c of the absorption column 2. Thereby, it is difficult for the exhaust gas to flow in a region in which the density of the absorption slurry sprayed in the absorption column 2 is low (see FIGS. 4, 17 and 18). Therefore, even if the width 6a of the inlet duct 6 is widened, the exhaust gas passing through the absorption column 2 is reduced in a state in which the desulfurization is insufficient, and the desulfurization performance is secured. In addition, by widening the width 6a of the inlet duct 6, the height 6b of the inlet duct 6 may be shortened, and an entire height of the absorption column 2 and a pump head of the circulation pump 7 may also be shortened. Therefore, a size of the desulfurization system 1 may be decreased and costs of the absorption column 2 may be reduced, as well as a power of the circulation pump 7 may be reduced. In particular, since the height 6b may be lowered as the width 6a of the inlet duct 6 is widened, the width 6a of the inlet duct 6 is preferably equal to or larger than the diameter 2a of the absorption column 2.

FIG. 5 is a graph showing a relationship between a throttling ratio of the straightening plate and a difference in the flow rate and a pressure loss in the desulfurization system of Embodiment 1.

In FIG. 5, a relationship between a ratio 11b/6a of the width 6a before being throttled by the straightening plate 11 to a width 11b after being throttled (hereinafter, referred to as a throttling ratio) and the pressure loss, and a relationship between the throttling ratio and a difference between a gas flow rate on the side wall in the absorption column 2 and an average flow rate were confirmed. When the throttling ratio is decreased (when the width 11b of the inner end 11a of the straightening plate 11 is shortened), the difference between the gas flow rate on the side wall and the average flow rate is not substantially changed, whereas the pressure loss is increased. Therefore, in the graph of FIG. 5, when the throttling ratio falls below 0.7, even if the width 11b is further shortened, only the pressure loss is increased, the desulfurization performance is not substantially changed.

On the other hand, in FIG. 5, when the throttling ratio exceeds 0.95, the difference between the gas flow rate on the side wall and the average flow rate is rapidly increased. Therefore, the gas easily flows into the region in which the density of the absorption slurry is low, and a deviation in SO₂ absorption in the exhaust gas may occur.

Therefore, when employing this configuration, the throttling ratio is preferably set to be 0.95 or less, and more preferably, the throttling ratio is set to be a range of 0.7 to 0.95.

Further, when the width 6a of the inlet duct 6 is reduced at a steep angle by the straightening plate 11, a vortex may easily occur on the downstream side from the inner end 11a. When the vortex occurs, problems such as an increase in the pressure loss and adhesion of the absorption slurry occur. Therefore, it is preferable that an angle θ of the straightening plate 11 for reducing the width 6a is set to be a low angle where it is difficult for the vortex to occur. In particular, it is preferable that an inclination angle θ between the wall surface on the upstream side of the inlet duct 6 and the inner surface of the upstream portion of the straightening plate 11 is 45 degrees or less.

Further, since the flow passage for the gas of Embodiment 1 is throttled by the straightening plate 11 inside from the inlet (upstream end 2b) of the absorption column 2, when the gas is deflected (throttled) toward the central portion 2c by the straightening plate 11, a part of the gas becomes a state capable of moving in the vertical direction along the absorption column 2. Therefore, when the flow passage for the gas is throttled by the straightening plate 11, a part of the gas escapes in the vertical direction, such that the flow rate of the gas is suppressed from becoming excessively high. Thereby, even if the gas flow is throttled by the straightening plate 11, it is possible to maintain the flow rate of the gas in a certain range (about 10 to 15 m/s).

FIG. 6 is an explanatory view of Modification 1 of the present invention.

In FIG. 6, in a desulfurization system 1 of Embodiment 1, it is also possible to configure the shape of a downstream end portion 6d (an example of the flow control part) of the inlet duct 6 so that the flow passage for the gas is reduced instead of the straightening plate 11. By the configuration as shown in FIG. 6, it is possible to reduce the number of components, but it is necessary to give attention to the fact that the structure of the inlet duct 6 is complicated and adequate strength needs to be secured.

Also in the configuration of Modification 1 shown in FIG. 6, similar to Embodiment 1, it is possible to reduce the costs and the power while securing the desulfurization performance.

FIG. 7 is an explanatory view of Modification 2 of the present invention.

In FIG. 7, by installing the straightening plate 11 in the desulfurization system 1 of Embodiment 1, a region 6e which does not come into contact with the exhaust gas and the absorption slurry to be sprayed is generated in the inlet duct 6. In the conventional inlet duct 6, since the region comes into contact with the exhaust gas and the absorption slurry, it was therefore necessary to use an acid resistant, corrosion resistant, and abrasion resistant material, but it is also possible to use inexpensive materials as a material for the region 6e in which the straightening plate 11 is installed.

By the above-described configuration, the costs of the desulfurization system 1 may be further reduced.

FIG. 8 is an explanatory view of Modification 3 of the present invention. In FIG. 8, the horizontal width 6a of the inlet duct 6 is set to be wider than the diameter 2a of the absorption column. In addition, it is configured so that the width of the inlet duct 6 at the downstream end portion of the inlet duct 6 is reduced to the diameter 2a of the absorption column 2, and the inlet duct 6 is connected to the absorption column 2. Also in this case, the desulfurization performance of the absorption column 2 may be secured by connecting the gas flow via the straightening plate 11 at the connection part with the absorption column 2 so as to be oriented toward the central portion 2c of the absorption column 2.

### (Other modifications)

Although the embodiments of the present invention have been described above in detail, the present invention is not limited to the above-described embodiments, and various modifications may be made within the scope of the present invention described in the claims. Modifications (H01) to (H05) of the present invention will be described as examples below.

(H01) In the above-described embodiments, the specific numerical values exemplified may be appropriately changed according to designs, specifications and the like.

(H02) In the above-described embodiments, in relation to the shape of the flow control part, the straightening plate 11 and the downstream end portion 6d having a substantially triangular shape (wedge shape) have been exemplified, but it is not limited thereto. The shape of the straightening plate 11 and the like may be changed to any shape such as a curved line or a trapezoidal shape, etc., according to the position and direction of flow of the gas desired to control. In addition, the configuration, in which the pair of the straightening plates 11 is provided on both sides in the width direction, has been exemplified, but it is not limited thereto. A configuration, in which one or three or more straightening plates are installed, may also be possible, so long as it can deflect the flow of the gas toward the central portion 2c of the absorption column 2.

(H03) In the above-described embodiments, the position of the upstream end 11c of the straightening plate 11 is preferably disposed on the downstream side from the upstream end 2b of the absorption column 2, but it is not limited thereto. For example, if the inner end 11a is on the downstream side from the upstream end 2b, the upstream end 11c of the straightening plate 11 may be arranged at the same as or on the upstream side from the upstream end 2b.

(H04) In the above-described embodiments, the position of the inner end 11a of the straightening plate 11 is preferably disposed on the upstream side from the outermost peripheral position (11d in FIG. 7) of the absorption column, but it is not limited thereto. For example, as shown in FIG. 8, when the width 6a of the inlet duct is formed larger than the inner diameter 2a of the absorption column, it is also possible to dispose the inner end 11a of the straightening plate 11 at the outermost peripheral position of the absorption column.

(H05) In the above-described embodiments, the material of the straightening plate 11 is preferably Hastelloy steel, etc. which is excellent in acid resistance, corrosion resistance, and abrasion resistance. However, it is also possible to use other alloy steels, linings and coating materials that conform to the above-described performance.

### [Reference Signs List]

- 1: Desulfurization system,
- 2: Absorption column,
- 2a: Diameter of absorption column,
- 2c: Central portion of absorption column,
- 6: Inlet duct,
- 6a: Horizontal width of inlet duct,
- 6d: Inner wall shape,
- 6e: Inlet duct portion not in contact with gas and absorption liquid,
- 11: Straightening plate,
- 11, 6d: Flow control part
- 11b: Width of inlet duct after being reduced by flow control part,
- 11b/6a: Ratio,
- θ: Angle of flow control part.

## Claims

1. A desulfurization system comprising:
an inlet duct through which a gas to be treated inflows; and
an absorption column configured to bring the gas to be treated introduced through the inlet duct into contact with an absorption liquid, remove sulfur oxides in the gas, and discharge the gas after desulfurization treatment,
wherein the inlet duct has a horizontal width which is wider than a diameter of the absorption column on an upstream side in a flow direction of the gas to be treated, and a downstream end connected to the absorption column.

2. The desulfurization system according to claim 1, further comprising a flow control part configured to deflect a flow of the gas flowing through the inlet duct toward a central portion of the absorption column.

3. A desulfurization system comprising:
an inlet duct through which a gas to be treated inflows;
an absorption column configured to bring the gas to be treated introduced through the inlet duct into contact with an absorption liquid, remove sulfur oxides in the gas, and discharge the gas after desulfurization treatment; and
a flow control part disposed near a connection part between the inlet duct and the absorption column, and configured to deflect a flow of the gas flowing through the inlet duct toward a central portion of the absorption column.

4. The desulfurization system according to claim 3, wherein the inlet duct has a horizontal width which is equal to or larger than a diameter of the absorption column, and the flow control part deflects the flow of the gas flowing through the inlet duct toward the central portion of the absorption column.

5. The desulfurization system according to any one of claims 2 to 4, wherein the flow control part includes a straightening plate disposed on an inner wall side of the inlet duct.

6. The desulfurization system according to claim 5, wherein a material of the inlet duct portion which does not come into contact with the gas and the absorption liquid by the straightening plate is different from a material of the straightening plate.

7. The desulfurization system according to any one of claims 2 to 4, wherein the flow control part includes a downstream part of the inlet duct having an inner wall shape which is inclined toward a center of the absorption column.

8. The desulfurization system according to any one of claims 5 to 7, wherein the horizontal width of the inlet duct is equal to or larger than the diameter of the absorption column,
a ratio of a length of a width of the inlet duct before being reduced by the flow control part to the width of the inlet duct after being reduced by the flow control part is 0.95 or less, and
an angle of the flow control part which reduces the inlet duct is 45 degrees or less.
